# EUROPEAN PATENT SPECIFICATION

(11) **EP 0 440 215 B1**
(45) Date of publication and mention of the grant of the patent: **25.10.1995**
(21) Application number: 91101235.9
(22) Date of filing: 30.01.1991
(51) Int. Cl.: B29D 17/00, B29C 33/72, G11B 7/26

(54) **Transfer device for disc base plate**
Transportvorrichtung für das Substrat einer Platte
Dispositif de transfert pour un support de disque

(30) Priority: 31.01.1990 JP 18831/90
(43) Date of publication of application: 07.08.1991
(73) Proprietor: SONY CORPORATION, Tokyo (JP)
(72) Inventor: Anezaki, Yoshikazu, Sony Magnetic Products, Inc., Tokyo (JP); Sasaki, Koji, Sony Magnetic Products, Inc., Tokyo (JP); Watanabe Hidetoshi, c/o Sony Corporation, Tokyo (JP); Suzuki, Hirotsugo, c/o Sony Corporation, Tokyo (JP)
(74) Representative: Schmidt-Evers, Jürgen, Dipl.-Ing.

(56) References cited:
- EP-A- 0 339 616
- DE-A- 3 223 133
- GB-A- 2 171 047

## Description

This invention relates to a transfer device for producing, by duplication, a base plate for a disc, such as an optical disc or a magneto-optical disc, by a photopolymerization process. More particularly, it relates to duplication of a disc base plate by transferring a pattern of projections and recesses on a stamper to a layer of a synthetic resin on the disc base plate curable with ultraviolet rays.

As a technique for duplicating a base plate for a disc, such as an optical disc or a magneto-optical disc, there is proposed, as an example, a photopolymerization process, according to which a synthetic resin curable upon irradiation of ultraviolet rays is employed.

According to the photopolymerization process, a liquid synthetic resin curable with UV rays is applied to one surface of a disc base plate such as by screen printing. The disc base plate is then placed on a stamper with the resin in intimate contact with the surface of the stamper on which the pattern of fine projections and recesses, that is, grooves or pits, is previously formed. The disc base plate is pressed against the stamper and UV rays are irradiated for curing the resin. The disc base plate carrying the layer of the cured resin thereon is then peeled off from the stamper to transfer the pattern of the fine projections and recesses, such as grooves or pits, onto the cured resin on the disc base plate.

The above described photopolymerization process is superior in faithfulness of duplication, and is free from stamper deterioration. In addition, it has such advantages that, especially when a glass base plate is employed, a disc base plate superior in dimensional stability and thermal resistance and exhibiting low birefringence may be obtained.

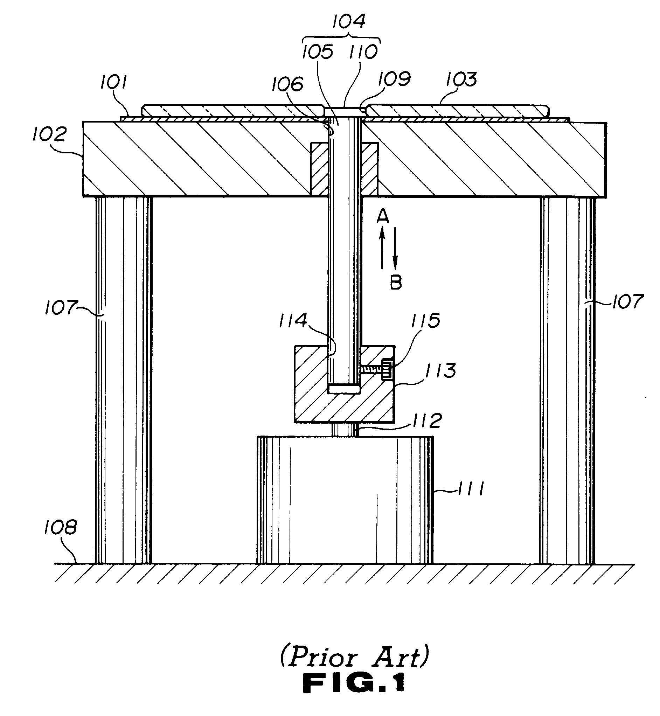

The apparatus employed for producing by duplication a disc base plate by the above mentioned photopolymerization process includes, as shown for example in Fig. 1, a stamper 101 on the surface of which a pattern of fine projections and recesses is formed, a table 102 for securing the stamper 101 thereto, and a centering pin 104 movable back and forth as shown by arrows A and B in Fig. 1 for peeling a disc base plate 103, such as glass base plate, from the stamper 101, after the pattern on the stamper 101 has been transferred to the cured resin affixed to the disc base plate.

The table 102 plays the role of a rest block to which the stamper 101 having the pattern of fine projections and recesses formed thereon is secured before proceeding to the transfer of the pattern to the layer of the UV curable synthetic resin, not shown, provided in contact with the disc base plate 103. A through-hole 106 for passage of a shank 105 of the centering pin 104 therethrough is formed along the plate thickness at about the center of the table 102. The table 102 is supported on a base block 108 by means of supporting columns 107.

The centering pin 104 serves for securing the disc base plate 103 at a predetermined position of the stamper 101 and for peeling the disc base plate 103 along with the cured resin layer from the stamper 101. To this end, the centering pin 104 is formed by a disc-shaped head 110 for fitting in a centering hole 109 formed at substantially the center of the disc base plate 103 for positioning the disc base plate 103 at a predetermined position of the stamper 101. The above mentioned shank 105 is slidable along the inner periphery of the through-hole 106 of the table 102 as the guide.

The head 110 is substantially coextensive as the centering hole 109 in the disc base plate 103 and adapted for being introduced into the centering hole 109 from the surface of the disc base plate 103 opposite to the stamper 101. The shank 105 is introduced into the through-hole 106 and has its lower extremity connected to a pneumatic cylinder 111 provided on the base block 108 so that the shank may be moved up and down along the inner peripheral surface of the through-hole 106 as the guide. More specifically, the lower extremity of the shank 105 is engaged in an engaging blind hole 114 of a connecting member 113 mounted on the distal end of a piston rod 112 of the pneumatic cylinder 111, and is secured to the connecting member in position by means of a bolt 115, the shank 105 being thereby operatively connected to the pneumatic cylinder 111.

For duplicating the disc base plate by the above described apparatus, the disc base plate 103, coated with a synthetic resin curable with ultraviolet rays, is placed on the stamper 101 secured to the table 102, with the synthetic resin in intimate contact with the stamper 101. The disc base plate 103 is secured at this time at a predetermined position of the stamper 101, with the head 110 of the centering pin 104 fitting in the centering hole 109.

The disc base plate 103 is then pressed by a roll, not shown, towards the stamper 101, while the synthetic resin curable with ultraviolet rays is uniformly charged into a space between the stamper 101 and the disc base plate 103.

The resin is then cured by irradiation of the ultraviolet rays from the side of the disc base plate 103.

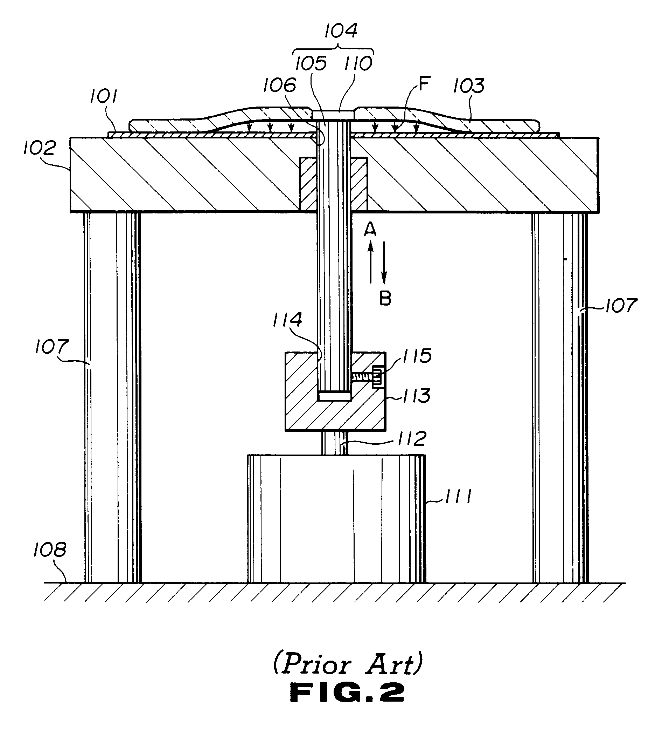

The centering pin 104 is then thrust upwards, in the direction of the arrow A in Fig. 2, for peeling the disc base plate 103 from the stamper 101 along with the cured resin layer.

As a result, the pattern of fine projections and recesses on the stamper 101 is transferred from the stamper onto the cured resin layer affixed to the disc base plate.

It will be noted that, when the disc base plate 103 is being peeled from the stamper 101, a negative pressure is induced between the stamper 101 and the disc base plate 103 kept in intimate contact with each other, such that a force F is generated which tends to attract the base plate 103 towards the stamper 101. The result is that the cured resin may occasionally remain on the stamper 101 as the disc base plate 103 is peeled off from the stamper. After peeling, not only the residual fine particles of the cured resin but also the dust and dirt contained in air may remain affixed on the stamper 101. If the transfer operation is continued under these conditions, not only the stamper 10 may be injured, but also the dust and dirt may be intruded into the cured resin to interfere with recording and/or reproduction.

On the other hand, if the centering pin 104 is lifted with too large a force against the above mentioned negative pressure for peeling the disc base plate from the stamper, the disc base plate 103 may be injured.

From the European patent application EP 0339616 an apparatus for manufacturing an optical information recording medium is known, in which the disc base plate is peeled from the stamper by supplying air into the gap between the cured resin and the stamper. It may, however, occur that dust or small particles from the cured resin remain on the stamper thus disturbing the manufacture of the following disc.

It is therefore a principal object of the present invention to provide a transfer device for a disc base plate wherein dust and dirt may be prevented from remaining on the stamper during peeling of the disc base plate and wherein the disc base plate may be peeled off easily from the stamper with the least risk of destruction of the disc base plate.

It is another object of the present invention to provide a transfer device for a disc base plate wherein dust and dirt may be prevented from remaining on the stamper after peeling of the disc base plate with the least risk of injury to the stamper.

The transfer device according to the present invention comprises a stamper on the surface of which a pattern of projections and recesses is formed, a stamper holding section for holding said stamper, and a centering pin for peeling said disc plate from said stamper after said pattern has been transferred by photopolymerization curing of a photopolymerization curable resin previously coated on said disc base plate, wherein a gas blowout is provided in the centering pin. The transfer device is further be provided with a cleaning unit comprising a gas blowout and a gas vent in the stamper holding section.

With the present transfer device, since the centering pin for peeling the disc base plate from the stamper after the pattern on the stamper has been transferred by photopolymerization curing of a photopolymerization curable resin previously applied to the disc base plate is provided with a gas blowout adapted for blowing out the gas, the gas may be injected by means of the gas blowout simultaneously with expulsion of the centering pin, thereby relieving the negative pressure prevailing between the stamper and the disc base plate for facilitating the peeling of the disc base plate from the stamper. In this manner, dust or dirt such as particles of cured resin is not allowed to remain on the stamper.

In addition, since the cleaning unit comprising the gas blowout and the gas vent is provided in the stamper holding section, any dust and dirt contained in air or fine particles of cured resin remaining on the stamper surface may be removed by cleaning the stamper surface by the cleaning device each time the disc base plate is peeled from the stamper, thereby preventing injuries to the stamper.

### Brief Description of the Drawings

Fig. 1 is a front view showing a disc base plate placed on a conventional disc base plate producing apparatus, with a portion being broken away.

Fig. 2 is a front view similar to Fig. 1 and showing the disc base plate being peeled from the stamper.

Fig. 3 is a diagrammatic top plan view showing a disc base plate producing apparatus according to the present invention.

Fig. 4 is an exploded perspective view showing a disk base plate transfer device according to the present invention.

Fig. 5 is a plan view of the transfer device shown in Fig. 4.

Fig. 6 is a cross-sectional view of the transfer device shown in Fig. 4.

Fig. 7 is a cross-sectional view showing essential portions of the transfer device shown in Fig. 4 prior to affixture of the stamper.

Fig. 8 is a similar view to Fig. 7 showing the same portions of the transfer device after affixture of the stamper.

Fig. 9 is a similar view to Fig. 7 showing the same portions of the transfer device after positioning of the disc base plate on the stamper.

Fig. 10 is a cross-sectional view showing essential portions of the transfer device shown in Fig. 4 when the gas is injected during peeling the disc base plate.

Fig. 11 is a cross-sectional view similar to Fig. 10 showing the disc base plate having been peeled from the stamper.

### Detailed Description of the Invention

The present invention will be hereinafter explained with reference to the application thereof to a transfer device for a disc base plate whereby the disc base plate may be produced by duplication by a series of steps of the photopolymerization process.

Before proceeding to the description of the process steps of producing the disc base plate by the transfer device of the present invention, the outline of the transfer device will be explained briefly.

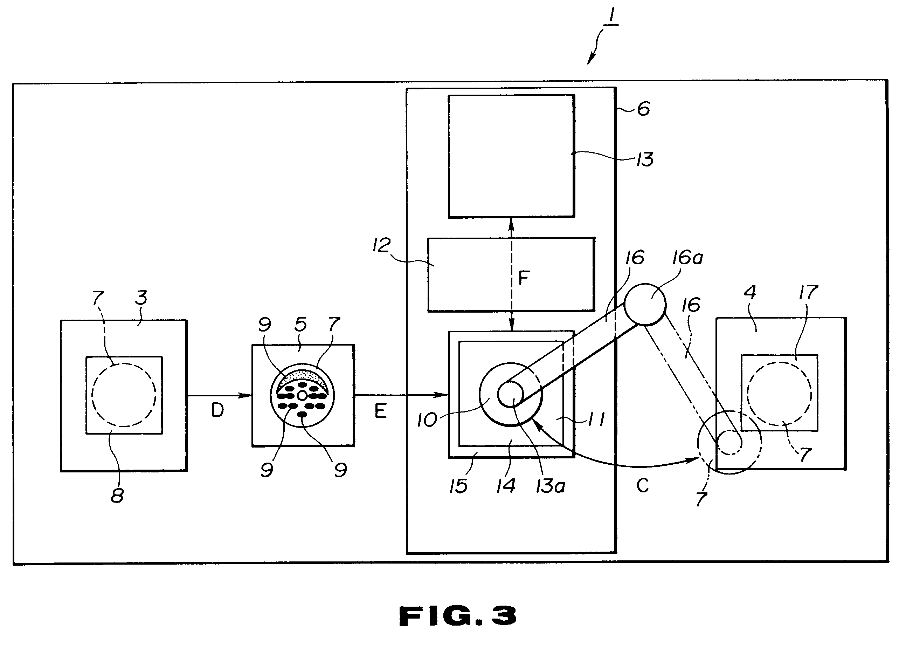

Referring to Fig. 3, the transfer device 1 for the disc base plate includes a disc base plate supply station 3, provided in the vicinity of a lateral edge on a machine base 2, a disc base plate takeout station 3, provided in the vicinity of the other lateral edge of the base 2, a resin supply station 5 and a transfer station 6 provided in this sequence between the disc base plate supply station 3 and the disc base plate takeout station 4.

The disc base plate supply station 3 is a storage section for storing a supply of disc base plates 7, such as glass base plates, for the adjacent resin supply station 5, and includes a cartridge 8 for storage of a number of disc base plates 7.

The resin supply station 5 is designed for applying a liquid synthetic resin 9 curable with ultraviolet rays to one surface of the disc base plate 7 which is mechanically taken out from the cartridge 8 one by one by a disc transport unit, not shown.

The transfer station 6 is constituted by a transfer device 11 for placing the disc base plate 7, mechanically transported from the resin supply station 5 one by one by means of a disc transport device, not shown, on a stamper 10 before transporting the disc base plate-stamper assembly to a predetermined processing position, a pressing device 12 for bringing the disc base plate 7 into intimate contact with the stamper 10, and a device for irradiation of ultraviolet rays 13 for curing the synthetic resin sandwitched between the disc base plate 7 and the stamper 10.

The transfer device 11 is so arranged that, when the disc base plate 7 is placed on the stamper 10, a movable table 15 mounted on a stamper holding section 14 holding the stamper 10 is moved towards the irradiation device 13. After the disc base plate 7 is pressed against the stamper 10 by the pressing device 12 provided at the mid position, and the synthetic resin is cured by the irradiation device 13, the movable table 15 is returned to its original position, where the disc base plate 7 is peeled from the stamper 10 along with the cured resin layer.

The pressing device 12 presses the disc base plate 7, transported thereto by the transfer device 11, by a roll, not shown, for uniformly charging the resin into the interstices defined by the pattern of alternate projections and recesses on the stamper 10.

The irradiation device 13 irradiates the resin pressed by the pressing device 12 from the side of the disc base plate 7 for curing the resin.

The disc base plate takeout station 4 transports the disc base plate 7, which has been peeled from the stamper 10, by means of a transport arm 16 rotated in the direction of an arrow C in Fig. 3 with a rotary shaft 16a as the center of rotation, for accommodating the disc base plate 7 within the transport cartridge 17.

For producing the disc base plate by the above mentioned producing apparatus 1 for disc base plates, the disc base plate 7 accommodated in the cartridge 8 of the disc base plate supply station 3 is taken out by the transport device and transported in the direction shown by an arrow D in Fig. 3 as far as the resin supply station 5.

In the resin supply section 5, the synthetic resin curable with ultraviolet rays is applied to one surface of the disc base plate 7.

The disc base plate 7, thus coated with synthetic resin, is transported by the transport device, in the direction shown by an arrow E in Fig. 3, so as to be placed on the stamper 10 of the transfer device 11, with the synthetic resin on the disc base plate 7 in intimate contact with the stamper 10.

When the disc base plate 7 is placed on the stamper 10, the movable table 15, movable back and forth in the direction shown by an arrow F in Fig. 3, is moved towards the irradiation device 13 and the disc base plate 7 is pressed against the stamper 10 by the pressing device 12 provided in the mid position.

The movable table 15 is further moved forwards for transporting the disc base plate 7 as far as the irradiation device 13 where the ultraviolet rays are irradiated for curing the resin.

The movable table 15 is then returned to its original position. The disc base plate 7 is then peeled off from stamper along with the resin cured in situ, by means of a centering pin, not shown, provided in the transfer unit 11.

The disc base plate 7 thus peeled off is accommodated in the takeout cartridge 17 of the disc base plate takeout station 4.

In the above described apparatus for duplicating the disc base plate 1, the present invention is applied to the transfer device 11 of the transfer section 6 of the producing apparatus 1.

An illustrative embodiment of the transfer device 11 will be explained by referring to the drawings.

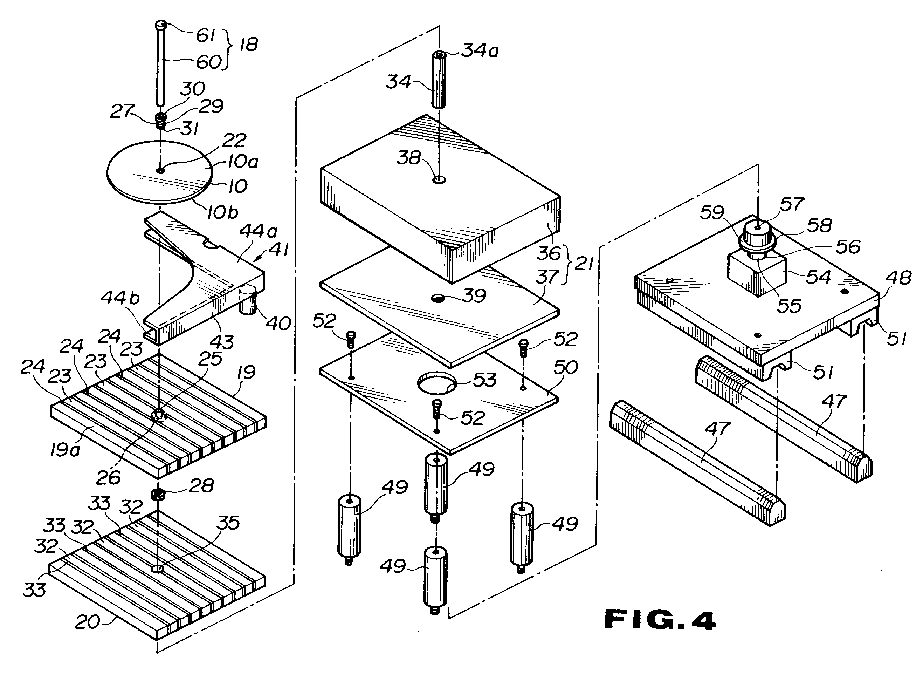

Referring mainly to Figs. 4 to 6, the transfer device 11 is constituted by the stamper 10 on the surface of which a pattern of fine projections and recesses are formed, the stamper holding section 14 for holding the stamper 10, the movable table 15 for moving the stamper holding section 14 to a predetermined position, and a centering pin 18, by means of which the disc base plate, having the pattern of projections and recesses on the stamper 10 transferred to the resin affixed thereto by photopolymerization curing of the resin, may be peeled off from the stamper 10.

The stamper 10 is formed of, for example, nickel, and has substantially the shape of a disc, on a major surface 10a of which a pattern of fine projections and recesses, such as grooves or pits corresponding to the recorded information, not shown, are formed. The stamper 10 has the other major surface 10b opposite to the major surface 10a which is a highly smooth surface adapted for resting on a resting surface 19a of a magnet adapter 19 which will be explained subsequently. A central through-hole 22 is formed substantially at the middle of the stamper 10 so as to be used as a positioning hole for the magnet adapter 19.

The stamper holding section 14 is constituted by the above mentioned magnet adapter 19 for supporting the stamper 10 thereon, a magnet chuck 20 for magnetically attracting and securing the magnet adapter 19 thereto and a holder 21 for holding the magnet adapter 19 and the magnet chuck 20.

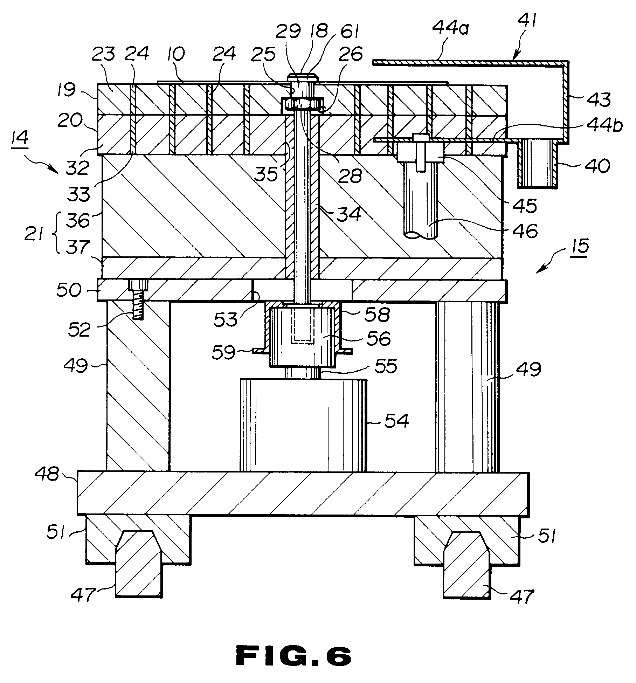

Referring to Fig. 6, the magnet adapter 19 is adapted for supporting the stamper 10 thereon and constituted by alternately arranged magnetic strips 23 and separators or spacers of low magnetic permeability 24. Since the magnet adapter 19 is adapted for supporting the stamper 10 thereon, it has a flattened smooth surface 19a on which to support the stamper 10. The magnet adapter 19 has a positioning through-hole 25 at substantially the middle position thereof into which a mounting ring 27 is introduced for securing the stamper 10 at a predetermined position of the magnet adapter 19. On a surface 19b of the magnet adapter 19 opposite to the supporting surface 19a for supporting the stamper 10, a recess 26 for accommodating a nut 28 adapted for securing the ring 27 to the magnet adapter 19 is formed as a blind hole at a position in register with the positioning hole 25. This recess 26 is formed as a circular cavity having a size larger than the outer size of the nut 28, such that, when the nut 28 is introduced into the recess 26, the nut 28 is accommodated with a clearance within a groove formed by the recess 26 of the magnet adapter 19.

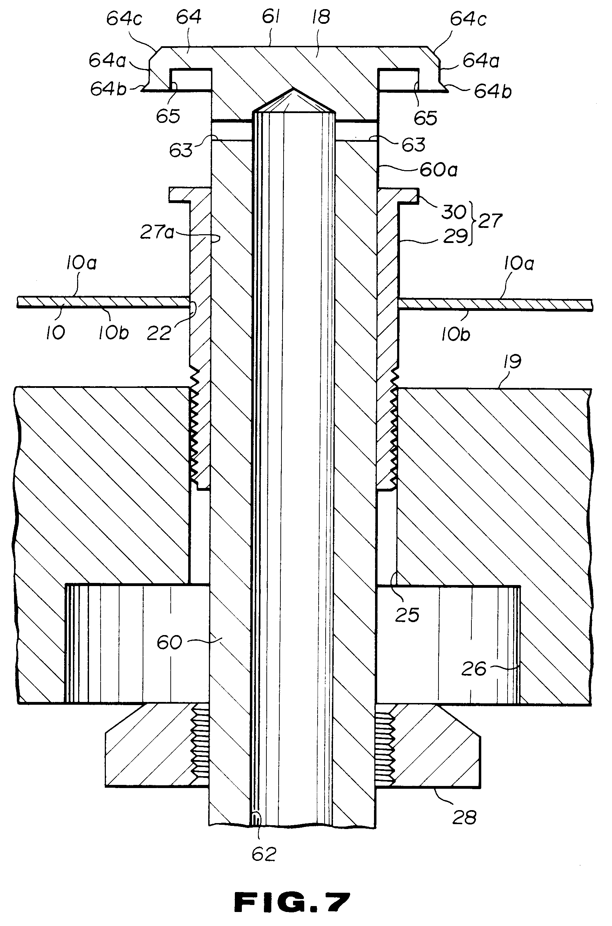

A series of different size adapters 19 are usually provided to suit the types of the stampers 10 which will be in use in the transfer device. That is, since the outside diameters and the sizes of the centering holes of the stampers differ with the different discs, such as optical discs, magneto-optical discs or even with different species of the optical or magneto-optical discs, a variety of magnet adapters 19 suited to these discs are usually necessitated.
referring to Fig. 7, the mounting ring 27 is constituted by a cylindrical tubular section 29 introduced through the centering hole 22 of the stamper 10 and the positioning hole 25 of the magnet adapter 19 and a flange-shaped stamper retainer 30 integral with and extending slightly outwardly from the upper end of the tubular section 29.

The tubular section 29 serves for positioning the stamper 10 with respect to the magnet adapter 19 and has the outside diameter approximately equal to the diameter of the centering hole 22 of the stamper and that of the positioning hole 25 of the magnet adapter 19. Hence, with the tubular section 29 passed through the centering hole 22 of the stamper 10 and the positioning hole 25 of the magnet adapter 19, the relative position of the centering hole 22 with respect to the positioning hole 25 and hence the relative position of the stamper 10 with respect to the magnetic adapter 19 is determined unequivocally. A male threaded section 31 meshing with the nut 28 is formed on the lower outer peripheral surface of the tubular section 29 for positively securing the mounting ring 27 to the magnet adapter 19. The centering pin 18 as later described is passed through an axial through-hole 27a in the mounting ring 27.

The stamper retainer 30 serves for securing the stamper 10 to the magnet adapter 19 and is adapted for retaining the opening edge portion of the centering hole 22 of the stamper 10. The stamper retainer 30 is of such a size as not to reach the pattern of projections and recesses provided on the major surface 10a of the stamper 10.

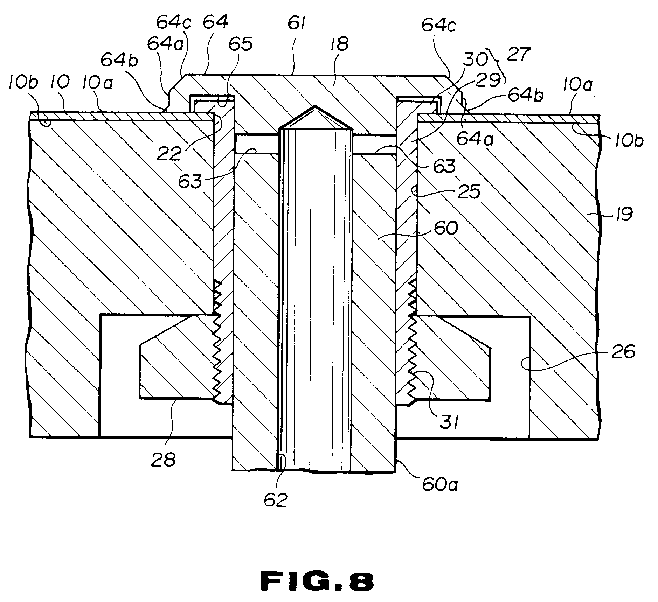

In this manner, by threading the nuts 28 with the male threaded section 31 of the mounting ring 27 passed through the centering hole 22 in the stamper 10 and through the positioning hole 25 in the magnet adapter 19 and intruded into the recess 26, the mounting ring 27 is secured to the magnet adapter 19, as shown in Fig. 8. Simultaneously, the stamper retainer 30 of the mounting ring 27 and the supporting surface 19a of the magnet adapter 19 cooperate for clamping the opening edge portion of the centering hole 22 of the stamper 10 for securing the stamper 10 to the magnet adapter 19.

The magnet chuck 20 serves for securing the magnet adapter 19, occasionally exchanged to suit the type of the stamper 10, by magnetic attraction thereto, and is constituted by alternately arranged magnetic strips 32 and separators or spacers of low magnetic permeability 33, similarly to the magnet adapter 19. The magnet chuck 20 and the magnet adapter 19 are stacked together so that the magnetic strips 23, 32 and the separators or spacers 24, 33 of the same widths overlap with each other and extend in the same direction.

The magnet chuck 20 is formed with on axial through-hole 35 at a position in register with the positioning hole 25 of the magnet adapter 19. A guide sleeve 34 for the centering pin 18 is mounted, such as by press-fitting, within the through-hole 35. The guide sleeve 34 is formed of, for example, synthetic resin, and has an axial central opening 34a through which the centering pin 18 is introduced. The centering pin 18 is slid within the guide sleeve 34 by being guided along the internal peripheral surface of the central opening 34a as the guides.

A predetermined current is supplied through a magnetic flux line generating section, not shown, annexed to the magnet chuck 20, thereby generating a powerful electromagnetic attractive force in the magnet chuck 20. Thus, when the predetermined current is supplied through the magnetic flux line generating section, the magnet adapter 19 is secured to the magnet chuck 20 by magnetic attraction. The stamper 10 to be secured to the magnet adapter 19 is also secured thereto by magnetic attraction to follow the flattened supporting surface 19a of the magnet adapter 19 to realize a high degree of flatness.

The holder 21 is used for holding the magnet adapter 19 and the magnet chuck 20, and is constituted by a first flat holding plate 36 of a larger thickness and a second flat holding plate 37 of a lesser thickness which is stacked on the first flat holding plate 36. These holding plates 36, 37 are provided with axial through-holes 38, 39, respectively, in register with the through-hole 35 of the magnet chuck 20. The through-holes 38, 39 serve the same purpose as that of the through-hole 35. Thus the guide sleeve 34 is press-fitted into these through-holes 38, 39. In this manner, the guide sleeve 34 is passed through the magnet chuck 20 and the holding plates 36 and 37.

The above described stamper holding section 14 is provided with a cleaning unit for removing fine particles of the cured resin remaining on the stamper 10 after peeling the disc base plate from the stamper 10 or fine dust and dirt in the air which tends to be affixed to the stamper 10.

The cleaning unit includes an air blowing section, not shown, provided with a blowout 42 for blowing off dust and dirt remaining on the stamper 10, and a dust cover 41, provided with an air vent 40 for collecting and forcedly discharging the blown out dust and dirt.

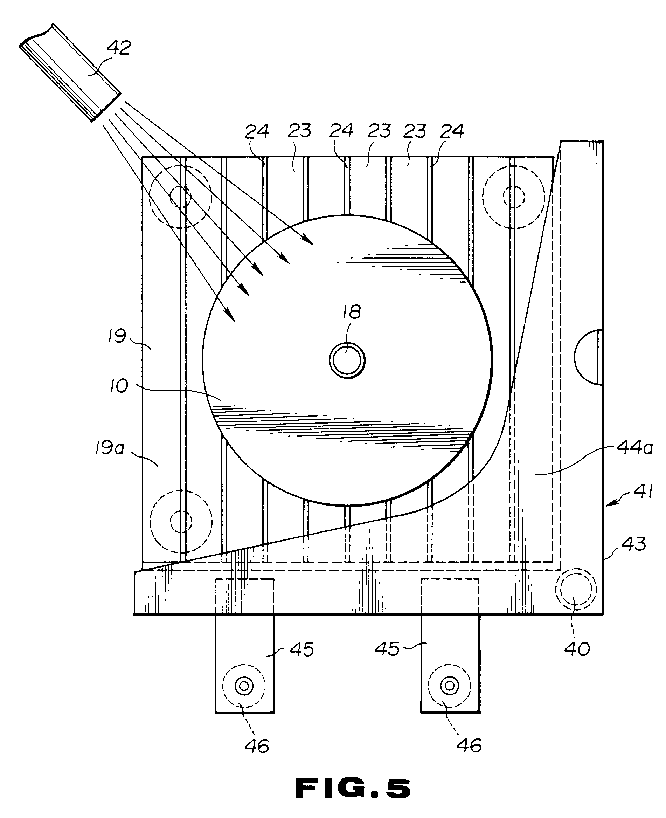

The blowing section is adapted for blowing out a gas, such as nitrogen or oxygen, onto the major surface 10a of the stamper 10 and, as shown in Fig. 5, has its blowout 42 substantially in alignment with one diagonal line of the square-shaped magnet adapter 19. The pressure of the gas blown out by means of the blowout 42 may be adjusted suitably by adjustment means, not shown.

The dust cover 41 is adapted for collecting the blown out dust and dirt and constituted by a side wall 43 surrounding two sides of the magnet adapter 19 to which the blowout 42 is directed, a first hood 44a integral with the side wall 43 and adapted for overlying the supporting surface 19a of the adapter 19 and a second hood 44b equally integral with the side wall 43 and mounted opposite to the first hood 44a.

The side wall 43 is bent in the form of a letter L for surrounding the two sides of the magnet adapter 19 to which the blowout 42 is directed, as shown in Fig. 5. The second hood 44b is provided at one end of the side wall 43. The cylindrical air vent 40 is provided at a position opposite to the blowout 42 for extending downwards. A suction pump, not shown, is mounted at the air vent 40, for forcedly drawing the dust and dirt. The dust and dirt blown out is led through the air vent 40 so as to be discharged to outside to keep the major surface 10a of the stamper 10 in clean at all times.

The first hood 44a is integrally mounted on the other end of the side wall 43 for overlying the surface 19a of the magnet adapter 19 and has its portion facing the stamper 10 cut out in the form of a parabola as shown. The reason that the hood 44a has its portion facing the stamper 10 cut out in this manner is that the glass base plate coated with the synthetic resin curable with ultraviolet rays may be placed on the stamper 10 without being obstructed by the dust cover 41.

For securing the dust cover 41 to the movable table 15, plates 45, 45 are fixedly mounted on the main body of the dust cover and columnar supports 46, 46 are fixedly mounted in the vicinity of the distal ends of the plates 45, 45. These supports 46, 46 are secured to the table 15 mounted on the stamper holding section 14. The dust cover 41 may, however, be mounted on the stamper holding section 14 in any other manner than that in the present embodiment.

The movable table 15 is adapted for moving the stamper holding section 14 to a predetermined processing position, and constituted by the base block 48 guided along rails 47, 47 and a stamper holding section mounting block 50 supported on the base block 48 by means of four supporting columns 49.

The base block 48 is provided with legs 51, 51 adapted for slidably engaging with parallel rails 47, 47.

The mounting block 50 is adapted for fixedly supporting the stamper holding section 14 thereon and, as shown in Figs. 4 and 6, is secured by four bolts 52 to four cylindrical supporting columns 49 provided at four corners of the base block 48. The mounting block 50 is provided with a through-hole 53 in register with a tap adapter 56 which will be explained subsequently.

The movable table 15, with the stamper holding section 14 resting thereon, is guided by the rails 47 as it is moved to a predetermined processing position.

A pneumatic cylinder 54 for vertically moving the centering pin 18 is provided on the base block 48. The above mentioned tap adapter 56 for connecting the centering pin 18 and the pneumatic cylinder 54 to each other is secured to the distal end of a piston rod 55 of the pneumatic cylinder 54.

The tap adapter 56 is provided with a locking unit whereby the centering pin 18, introduced at its lower end into an upwardly opening through-hole 57, may be moved in the inserting direction but cannot be moved in the extracting direction opposite thereto. Locking may be released in a simple manner by pressing down a lug 59 of an operator 58 mounted for overlying the tap adapter 56.

Referring to Figs. 7 and 8, the centering pin 18 is used for peeling the disc base plate 7, onto which the pattern of minute projections and recesses on the stamper 10 has been transferred by curing of the resin layer, from the stamper 10, and is constituted by a cylindrical inserting section 60 connected to the pneumatic cylinder 54 and a positioning section 61 for positioning the disc base plate 7.

The inserting section 60 is introduced in the through-hole 27a of the mounting ring 27 and the through-hole 34a of the guide sleeve 34 and is adapted for being slid with the inner peripheral surfaces of the through-holes 27a and 34a as the guides. The lower extremity of the inserting section 60 is introduced into and locked by the blind hole 57 of the tap adapter 56. In this manner, the centering pin 18 is connected to the pneumatic cylinder 54 by means of the tap adapter 56.

An air hole 62 having substantially the circular cross-section is formed as a blind hole extending from its lower extremity to the vicinity of its upper extremity. A gas inlet unit, not shown, is connected to the air hole 62 for introducing a gas, such as air or nitrogen. A plurality of air blowouts 63 extending from the air hole 62 as far as the outer peripheral surface 60a of the inserting section 60 are formed at a suitable interval in the vicinity of the upper extremity of the air hole 62. Thus the gas introduced from the air hole 62 is adapted to be blown by way of the air blowouts 63. It is noted that the gas is blown out via air blowouts 63 in association with the movement of the centering pin 18, that is in association with the initiation of the rising movement of the centering pin 18.

The positioning section 61 is used for positioning the disc base plate 7 at a predetermined position of the stamper 10, and is adapted to bit in a centering hole 66 of the disc base plate 7. Thus the positioning section 61 has a flange 64 extending radially outwards from the upper extremity of the inserting section 60 for fitting in the centering hole 66 of the disc base plate 7 for positioning the disc base plate 7.

The outer periphery of the flange 64 is formed with a base plate positioning section 64a which is an annular surface substantially parallel to the axis of the inserting section 60. The base plate positioning section 64a is of substantially the same outside diameter as the centering hole 66 in the disc base plate 7 and is adapted for engaging with a positioning surface 66c of the centering hole 66. In this manner, the disc base plate 7 is positioned at the predetermined position of the stamper 10 by the base plate positioning section 64a.

The extremity of the flange 64 is formed as a chamfered inserting section 64c to permit facilitated fitting into the positioning section 61 of the disc base plate 7.

The outer periphery of the flange 64 is formed with a tapered surface 64b for engaging with a tapered surface 66b on the outer periphery of the centering hole 66 of the disc base plate 7 for uplifting the tapered surface 66b during peeling of the disc base plate 7. The tapered surface 64b is commenced at the lower extremity of the base plate positioning section 64a and gradually reduced in diameter in the upward direction. The tapered surface 64b is engaged with the lower side of the disc base plate 7 for supporting the tapered surface 66b of the centering hole 66b of the disc base plate 7 from its lower side. Meanwhile, the surface of the tapered surface 64b facing the stamper 10 is pressed against the stamper 10.

The surface of the flange 64 facing the stamper retainer 30 of the mounting ring 27 is formed with an annular recess 65 having its inner end delimited by the outer peripheral surface 60a of the inserting section 60. This recess 65 serves as a clearance for the stamper retainer 30 of the mounting ring 27. Thus, with the flange 64 resting on the stamper 10, the stamper retainer 30 is accommodated with a small clearance within the recess 65.

The operation of transferring the pattern of alternate projections and recesses on the stamper 10 onto the layer of synthetic resin curable with ultraviolet rays on one surface of the disc base plate 7, with the aid of the above described transfer device 11, is hereinafter explained.

The disc base plate 7, having its one side coated with a liquid synthetic resin curable with ultraviolet rays during the preceding step, is placed on the stamper 10, with the resin coated side facing downwards. Thus the disc base plate 7 is placed on the stamper 10 with the resin curable with ultraviolet rays facing the one major surface 10a of the stamper 10.

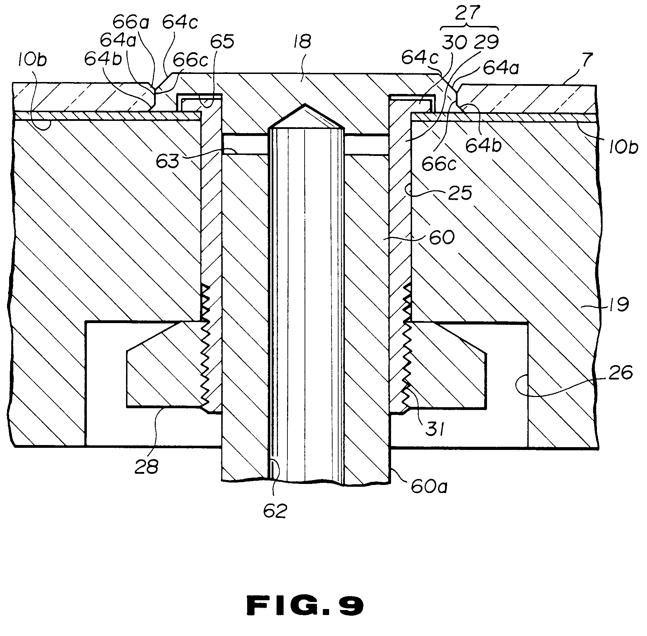

The disc base plate 7 is a disc-shaped base plate formed of transparent glass or transparent synthetic resin and provided with central centering hole 66, as shown for example in Fig. 9. The upper and lower portion of the opening rim of the centering hole 66 are formed as chamfered tapered surfaces 66a, 66b, respectively. The inner peripheral surface 66c of the centering hole 66 delimited between these tapered surfaces 66a, 66b serves as the positioning surface.

When placing the disc base plate 7 on the stamper 10, the tapered surface 66b of the disc base plate 7 towards the stamper 10 is guided by the inserting section 64c of the centering pin 18 for engaging the positioning surface 66c of the disc base plate 7 with the base plate positioning surface 66c of the centering pin 18. The tapered surface 66b of the disc base plate 7 is engaged with the tapered surface 64b of the centering pin 18. As a result, the disc base plate 7 may be positioned accurately at the predetermined position of the stamper 10.

With the disc base plate 7 held on the stamper 10, the movable table 15 is moved along the rails 47, 47 as far as the pressing device 11 provided at the mid position. The disc base plate 7 is pressed, such as by a roll, against the stamper 10.

As a result, the liquid synthetic resin, interposed between the space between the disc base plate 7 and the stamper 10, is uniformly charged into the interstices defined between the minute projections and recesses on the major surface 10a of the stamper 10.

The movable table 15 is moved forwards along the rails 47, 47 as far as the irradiation device 13 where the ultraviolet rays are irradiated from the side of the disc base plate 7 for curing the liquid synthetic resin.

When the resin is cured, the movable table 15 is moved along the rails 47, 47 to its original position, that is the position where the disc base plate 7 is initially placed on the stamper 10. In this position, the disc base plate 7 as well as the layer of the cured resin, not shown, is peeled from the stamper 10.

The disc base plate 7 is peeled from the stamper 10 in the following manner.

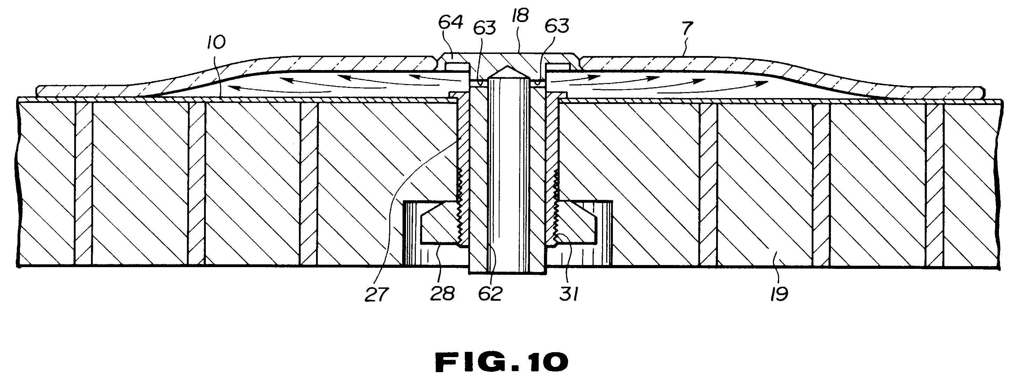

The piston rod 55 is first raised by the actuation of the pneumatic cylinder 54. The centering pin 18 is raised, as shown in Fig. 10, by means of tap adapter 56 secured to the distal end of the piston rod 55, as the centering pin 18 is guided by the guide sleeve 34 and the mounting ring 27.

Since the tapered surface 66b of the disc base plate 7 is engaged at this time on the tapered surface 64b of the centering pin 18 from the upper side, as shown in Fig. 9, the disc base plate 7 is raised at the center position along with the cured resin layer, with the rising movement of the centering pin 18, as shown in Fig. 10. The cleaning air is injected, in association with the rising movement of the centering pin 18, from the air flowouts 63 in the centering pin 18, as shown in Fig. 10. The gas need not be the cleaning air, but may be any other gas, such as nitrogen. The pressure of the injected gas need not be raised positively but the pressure which will relieve the negative pressure, such as the pressure of 0.2 to 0.3 kg/cm², for example, is sufficient.

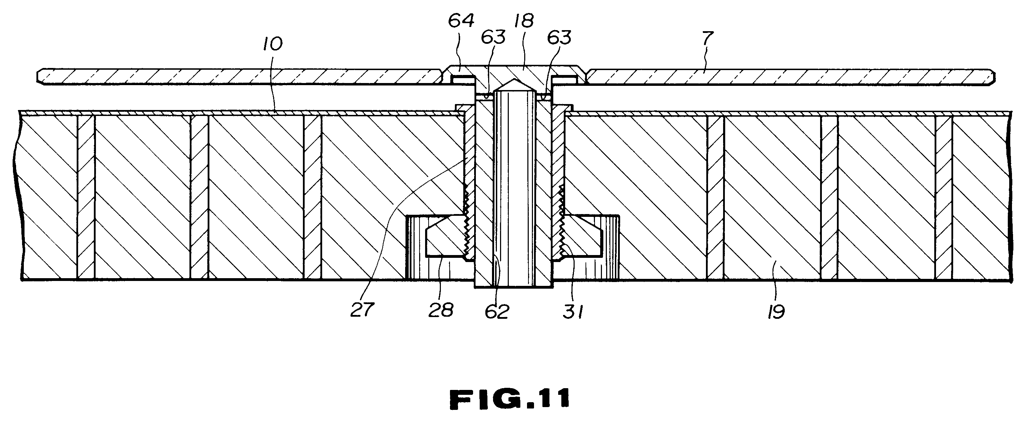

This reduces the negative pressure between the disc base plate 7 and the stamper 10 to avoid the state of vacuum, so that the disc base plate 7 may be peeled off easily from the stamper 10, as shown in Fig. 11, without the cured resin on the disc base plate 7 remaining on the stamper 10. Since the disc base plate 7 may be peeled off easily as a result of air injection, there is no risk of destruction of the disc base plate 7.

The nitrogen gas, for example, is then injected onto the major surface 10a of the stamper 10, now freed of the disc base plate 7, for blowing off fine particles of the cured resin remaining on the major surface 10a of the stamper 10 or fine dust and dirt in air affixed on the stamper. These particles or the dust and dirt are drawn by way of the air vent 40 provided in the dust cover 41 so as to be expelled out of the transfer device.

As a result, dust or dirt is removed from the stamper 10, which may now be in the clean state to prevent injuries to the stamper 10 to protract the service life of the stamper 10. In addition, the yield of duplication of the disc base plate by the stamper 10 may be improved.

## Claims

1. A transfer apparatus comprising
a stamper (10) on the surface of which a pattern of projections and recesses is formed,
a stamper holding section (14) for holding said stamper (10),
a centering pin (18) for peeling a disc base plate (7) from said stamper (10) after said pattern has been transferred to a photopolymerization curable resin previously coated on said disc base plate (7) by bringing said stamper (10) into intimate contact with said disc base plate (7) and curing said resin by photopolymerization, and
first gas blowout means (62, 63) provided in said centering pin (18)
**characterized by**
stamper surface cleaning means (40, 41, 42) provided in said stamper holding section (14) for blowing gas onto the stamper (10) after peeling said disc base plate (7) from said stamper (10) by said centering pin (18).

2. The transfer apparatus according to claim 1 wherein said stamper surface cleaning means (40, 41, 42) comprises a second gas blowout (42) and a gas vent (40) provided in said stamper holding section (14).

3. The transfer apparatus according to claim 2, wherein said stamper surface cleaning means comprises a dust cover (41) for sucking the gas blown out by means of said second gas blowout (42) and discharging the gas by means of said gas vent (40).

4. The transfer apparatus according to claim 3, wherein said dust cover (41) has a shape surrounding two sides of the stamper holding section (14).

5. The transfer apparatus according to one of claims 1 to 4, wherein gas is injected by means of said first gas blowout (62, 63) in association with the peeling of said disc base plate (7) by said centering pin (18).

6. The transfer apparatus according to claim 5, further comprising means (54, 55) for driving said centering pin in a direction of peeling said disc base plate (7) from said stamper (10) and means for blowing out gas from said first blowout (62, 63) in said centering pin (18) in association with the movement of said centering pin (18) in the direction of peeling said disc base plate (7) from said stamper (10).

7. The transfer apparatus according to claim 5 or 6, wherein the pressure of the gas injected by means of said first blowout (62, 63) in said centering pin (18) in association with the peeling movement of said centering pin (18) is a pressure sufficient to eke out the negative pressure produced during peeling the disc base plate (7) from the stamper (10).

8. The transfer apparatus according to anyone of claims 1 to 7, wherein said first blowout (62, 63) is provided in the vicinity of a portion of said centering pin (18) supporting said disc base plate (7).

## Patentansprüche

1. Transportvorrichtung, mit:
einem Stempel (10), auf dessen Oberfläche ein Muster von Erhebungen und Ausnehmungen gebildet ist,
einem Stempelhalteabschnitt (14) zum Halten des Stempels (10),
einem Zentrierstift (18) zum Ablösen eines Plattenunterteils (7) vom Stempel (10), nachdem das Muster zu einer Photopolymerisationseinrichtung gebracht wurde, wobei aushärtbares Harz vorher auf das Plattenunterteil (7) aufgebracht wurde, wobei dieser Stempel (10) in engen Kontakt mit dem Plattenunterteil (7) gebracht wird und das Harz durch Photopolymerisation ausgehärtet wird, und
einer ersten Gasausblaseinrichtung (62, 63), die in dem Zentrierstift (18) vorgesehen ist,
**gekennzeichnet durch**
eine Stempeloberflächenreinigungseinrichtung (40, 41, 42), die im Stempelhalteabschnitt (14) vorgesehen ist, um Gas auf den Stempel (10) zu blasen, nachdem das Plattenunterteil (7) vom Stempel (10) durch den Zentrierstift (18) abgelöst wurde.

2. Transportvorrichtung nach Anspruch 1, wobei die Stempeloberflächenreinigungseinrichtung (40, 41, 42) eine zweite Gasausblaseinrichtung (42) und einen Gasabzug (40) aufweist, die im Stempelhalteabschnitt (14) vorgesehen sind.

3. Transportvorrichtung nach Anspruch 2, wobei die Stempeloberflächenreinigungseinrichtung eine Staubabdeckung (41) aufweist, um das Gas, das durch die zweite Gasausblaseinrichtung (42) ausgeblasen wurde, aufzusaugen und das Gas durch den Gasabzug freizulassen.

4. Transportvorrichtung nach Anspruch 3, wobei die Staubabdeckung (41) eine Form hat, die zwei Seiten des Stempelhalteabschnitts (14) umgibt.

5. Transportvorrichtung nach einem der Ansprüche 1 bis 4, wobei Gas durch die erste Gasausblaseinrichtung (62, 63) beim Ablösen des Plattenunterteils (7) durch den Zentrierstift (18) eingespritzt wird.

6. Transportvorrichtung nach Anspruch 5, die weiter eine Einrichtung (54, 55) zum Antrieb des Zentrierstift in einer Richtung aufweist, in der das plattenunterteil (7) vom Stempel (10) abgelöst wird, und eine Einrichtung, um Gas aus der ersten Ausblaseinrichtung (62, 63) im Zentrierstift (18) bei der Verschiebung des Zentrierstifts (18) in der Ablöserichtung des Plattenunterteils (7) vom Stempel (10) herauszublasen.

7. Transportvorrichtung nach Anspruch 5 oder 6, wobei der Druck des Gases, das durch die erste Ausblaseinrichtung (62, 63) im Zentrierstift (18) bei der Ablösebewegung des Zentrierstifts (18) eingespritzt wird, ein Druck ist, der ausreichend ist, den negativen Druck zu kompensieren, der während des Ablösens des Plattenunterteils (7) vom Stempel (10) erzeugt wird.

8. Transportvorrichtung nach einem der Ansprüche 1 bis 7, wobei erste Ausblaseinrichtung (62, 63) in der Nähe eines Teils des Zentrierstifts (18) vorgesehen ist, der das Plattenunterteil (7) trägt.

## Revendications

1. Appareil de transfert comprenant :
une matrice (10) à la surface de laquelle est formé un dessin de saillies et de cavités,
une section (14) de support de la matrice (10),
une broche (18) de centrage destinée à la séparation d'une plaque de base de disque (7) de la matrice (10) par pelage après le transfert du dessin à une résine photopolymérisable préalablement revêtue sur la plaque de base de disque (7) par mise de la matrice (10) en contact intime avec la plaque de base de disque (7) et par durcissement de la résine par photopolymérisation, et
un premier dispositif (62, 63) de soufflage de gaz placé dans la broche de centrage (18),
caractérisé par
un dispositif (40, 41, 42) de nettoyage de la surface de la matrice, placé dans la section (14) de support de matrice et destiné à souffler un gaz sur la matrice (10) après la séparation de la plaque de base de disque (7) de la matrice (10) par pelage à l'aide de la broche de centrage (18).

2. Appareil de transfert selon la revendication 1, dans lequel le dispositif (40, 41, 42) de nettoyage de la surface de la matrice comporte un second organe (42) de soufflage de gaz et un organe (40) de ventilation placé dans la section (14) de support de matrice.

3. Appareil de transfert selon la revendication 2, dans lequel le dispositif de nettoyage de la surface de la matrice comporte un couvercle antipoussière (41) destiné à aspirer le gaz chassé par le second organe (42) de soufflage de gaz et à évacuer le gaz par un organe (40) de ventilation.

4. Appareil de transfert selon la revendication 3, dans lequel le couvercle antipoussière (41) a une configuration telle qu'il entoure deux côtés de la section (14) de support de matrice.

5. Appareil de transfert selon l'une des revendications 1 à 4, dans lequel un gaz est injecté par le premier organe (62, 63) de soufflage de gaz en coopération avec la séparation de la plaque de base de disque (7) par pelage à l'aide de la broche de centrage (18).

6. Appareil de transfert selon la revendication 5, comprenant en outre un dispositif (54, 55) de déplacement de la broche de centrage dans le sens qui provoque la séparation de la plaque de base de disque (7) de la matrice (10) par pelage, et un dispositif de soufflage d'un gaz par le premier organe de soufflage (62, 63) dans la broche de centrage (18) en coopération avec le déplacement de la broche de centrage (18) dans le sens qui provoque la séparation de la plaque de base de disque (7) de la matrice (10) par pelage.

7. Appareil de transfert selon la revendication 5 ou 6, dans lequel la pression du gaz injecté par le premier organe de soufflage (62, 63) dans la broche de centrage (18) en association avec le déplacement de pelage de la broche de centrage (18) est une pression suffisante pour compenser la dépression produite au cours du pelage de la plaque de base de disque (7) de la matrice (10).

8. Appareil de transfert selon l'une quelconque des revendications 1 à 7, dans lequel le premier organe de soufflage (62, 63) est placé à proximité d'une partie de la broche de centrage (18) qui supporte la plaque de base de disque (7).
